# DEMANDE DE BREVET EUROPEEN

(11) **EP 1 826 446 A1**
(43) Date de publication de la demande: **29.08.2007**
(21) Numéro de dépôt: 06300155.6
(22) Date de dépôt: 22.02.2006
(51) Int. Cl.: F16D 55/22

(54) **Système de freinage pour roue de véhicule automobile**

(71) Demandeur: Delphi Technologies, Inc., Troy, MI 48007 (US)
(72) Inventeur: Delayre, Xavier, 92400, COURBEVOIE (FR); Padiolleau, Eric, 91120, PALAISEAU (FR)
(74) Mandataire: Laget, Jean-Loup

(57) **Abrégé**

Système de freinage (21) pour roue de véhicule automobile, comprenant un support de disque (22), au moins un disque de freinage (23a, 23b) solidaire en rotation dudit support de disque et mobile de manière axiale, un étrier (27), une première plaquette de frein (24) portée de manière axialement mobile par ledit étrier et une deuxième plaquette de frein (25), ledit étrier comportant une première portion (28) agencée du côté de la première plaquette de frein opposé au disque de freinage, une deuxième portion (29) agencée du côté de la deuxième plaquette de frein opposé au disque de freinage et au moins un bras reliant lesdites première et deuxième portions, ladite deuxième portion présentant une surface d'appui, ledit système de freinage comprenant un actionneur (32) fixé à ladite première portion dudit étrier, ledit actionneur étant apte à déplacer ladite première plaquette de frein de manière à générer un couple de freinage dudit véhicule, caractérisé par le fait que lesdites première et deuxième portions et ledit au moins un bras dudit étrier sont réalisés d'une seule pièce.

## Description

La présente invention se rapporte à un système de freinage pour roue de véhicule automobile du type comprenant un support de disque destiné à former un élément rotatif de ladite roue, et au moins un disque de freinage solidaire en rotation dudit support de disque et mobile de manière axiale par rapport audit support de disque.

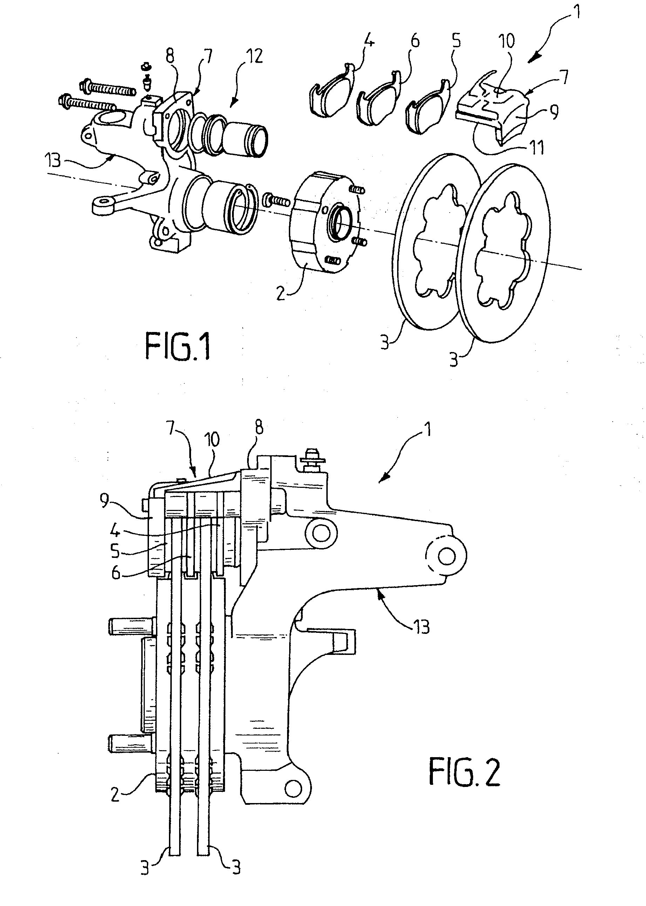

Un système de freinage selon l'art antérieur est représenté sur les figures 1 et 2. Le système de freinage 1 comprend un support de disque 2 destiné à former un élément rotatif de la roue. Deux disques de freinage 3 sont montés sur le support de disque 2. Les disques de freinage 3 sont solidaires en rotation du support de disque 2 et sont aptes à se déplacer axialement par rapport au support de disque 2. Le support de disque 2 est relié à un support de roue 13.

Un étrier 7 chevauche les disques de freinage 3. Plus précisément, l'étrier 7 comprend une première portion 8 constituée par une plaque solidarisée au support de roue 13, une deuxième portion 9 agencée du côté des disques de freinage 3 opposée au support de roue 13 et un pont 10 reliant la première portion 8 à la deuxième portion 9. L'étrier 7 comprend également deux tiges de support 11 s'étendant sous le pont 10.

Le système de freinage 1 comprend une plaquette de frein intérieure 4 agencée entre la première portion 8 de l'étrier 7 et un disque de freinage 3, une plaquette de frein centrale 6 agencée entre les deux disques de freinage 3 et une plaquette de frein extérieure 5 agencée entre un disque de freinage 3 et la deuxième portion 9 de l'étrier 7. Les plaquettes de frein 4, 5 et 6 comprennent des oreilles coopérant avec les tiges de support 11 de sorte que les plaquettes de frein 4, 5 et 6 peuvent se déplacer axialement par rapport à l'étrier 7.

Le système de freinage 1 comprend également un actionneur 12 fixé au support de roue 13 et comprenant un piston apte à exercer une force axiale sur la plaquette de freinage intérieure 4. Ainsi, lorsque l'actionneur reçoit un signal de commande de freinage, il exerce une force sur la plaquette de freinage intérieure 4 et la déplace en direction de la deuxième portion 9 de l'étrier 7. Un contact est alors créé entre la plaquette de freinage intérieure 4 et le premier disque de frein 3, entre le premier disque de freinage 3 et la plaquette de frein centrale 6, entre la plaquette de frein centrale 6 et le deuxième disque de freinage 3, entre le deuxième disque de freinage 3 et la plaquette de frein extérieure 5 et entre la plaquette de frein extérieure 5 et la deuxième portion 9 de l'étrier 7. Un couple de freinage est donc généré pour ralentir le véhicule automobile.

Un tel système de freinage à double disque de freinage présente plusieurs avantages. Ce système de freinage 1 présente quatre surfaces de friction et quatre surfaces de refroidissement des disques de freinage 3. On peut donc générer un couple de freinage important tout en limitant les problèmes thermiques liés à l'échauffement des disques de freinage et des éléments environnants.

Toutefois, le système de freinage 1 des figures 1 et 2 présente également certains inconvénients. Le pont 10 constitue un écran qui empêche d'inspecter visuellement l'usure des plaquettes de frein. Le pont 10 limite aussi le refroidissement des disques de freinage 3. Pour remplacer les plaquettes de frein, il est nécessaire de désolidariser le pont 10 et la deuxième portion 9 de la première portion 8 de l'étrier 7. Cette opération nécessite donc un temps important. L'étrier 7 est constitué de plusieurs pièces qui doivent être assemblées. Cela implique des exigences au niveau des tolérances de fabrication et une opération d'assemblage de durée importante. Enfin, lors de l'application du freinage, l'étrier 7 a tendance à se déformer en trapèze, le pont 10 présentant une courbure concave vers le haut de la figure 2. Dans ce cas, l'usure des plaquettes de frein n'est pas uniforme. Au contraire, elle présente une distribution radiale.

L'invention vise à fournir un système de freinage ne présentant pas au moins certains des inconvénients cités de l'art antérieur. Pour cela, l'invention fournit un système de freinage pour roue de véhicule automobile, ledit système de freinage comprenant un support de disque destiné à former un élément rotatif de ladite roue, au moins un disque de freinage solidaire en rotation dudit support de disque et mobile de manière axiale par rapport audit support de disque, un étrier destiné à être monté de manière fixe par rapport à un support de ladite roue, au moins une première plaquette de frein portée de manière axialement mobile par ledit étrier d'un côté dudit au moins un disque de freinage et une deuxième plaquette de frein portée par ledit étrier de l'autre côté dudit au moins un disque de freinage, ledit étrier comportant une première portion agencée du côté de la première plaquette de frein opposé au disque de freinage, une deuxième portion agencée du côté de la deuxième plaquette de frein opposé au disque de freinage et au moins un bras reliant lesdites première et deuxième portions, ladite deuxième portion présentant une surface d'appui, ledit système de freinage comprenant un actionneur fixé à ladite première portion dudit étrier, ledit actionneur étant apte à déplacer ladite première plaquette de frein de manière à générer un couple de freinage dudit véhicule par contact entre la première plaquette de frein et ledit au moins un disque de freinage, entre ledit au moins un disque de freinage et ladite deuxième plaquette de frein et entre ladite deuxième plaquette de frein et ladite surface d'appui, caractérisé par le fait que lesdites première et deuxième portions et ledit au moins un bras dudit étrier sont réalisés d'une seule pièce.

Grâce à ces caractéristiques, l'étrier peut être fabriqué facilement. Il peut, par exemple, être fabriqué par moulage et usinage. De plus, on obtient un système de freinage de poids réduit.

De préférence, ledit étrier comprend un premier bras et un deuxième bras reliant lesdites première et deuxième portions, ledit actionneur étant apte à exercer une force alignée selon un axe de poussée sur ladite première plaquette de frein, lesdits bras s'étendant partiellement dans un plan géométrique comprenant ledit axe de poussée, parallèlement audit axe de poussée de part et d'autre dudit axe de poussée.

Dans ce cas, les bras travaillent essentiellement en traction lors de l'application du freinage. La déformation de l'étrier correspond donc essentiellement à un allongement des bras. On limite ainsi l'usure non uniforme des plaquettes de frein.

Avantageusement, lesdits bras sont symétriques par rapport à un plan de symétrie perpendiculaire audit plan géométrique et comprenant ledit axe de poussée.

De préférence, ledit étrier est symétrique par rapport audit plan de symétrie.

Ces caractéristiques sont particulièrement intéressantes pour limiter l'usure non uniforme des plaquettes de frein.

Selon une mode de réalisation particulier, ledit étrier présente un logement central délimité par lesdits bras et lesdites première et deuxième portions, lesdites plaquettes de frein étant agencées dans ledit logement central, ledit logement central étant ouvert du côté tourné vers ledit support de roue pour recevoir partiellement ledit au moins un disque de freinage, ledit logement central étant ouvert du côté opposé audit support de roue, lesdites plaquettes de frein étant aptes à être insérées dans et extraites du logement central par ledit côté opposé audit support de roue.

Grâce à ces caractéristiques, on peut inspecter visuellement l'usure des plaquettes de frein. De plus, il n'est pas nécessaire de démonter l'étrier pour remplacer les plaquettes de frein. L'ouverture du logement central permet aussi un meilleur refroidissement des disques de freinage.

Selon un mode de réalisation particulier, le système de freinage comprend des moyens de retenue apte à empêcher l'insertion ou l'extraction desdites plaquettes de frein du logement central par ledit côté opposé audit support de roue.

De préférence, lesdits moyens de retenue comprennent au moins une goupille amovible s'étendant entre lesdites première et deuxième portions du côté desdites plaquettes de frein opposé audit support de roue, lesdites première et deuxième portions comprenant chacune au moins un alésage de fixation de ladite goupille.

Avantageusement, lesdites plaquettes de freins sont portées par ledit étrier par l'intermédiaire d'un organe de maintien et de glissement.

Ainsi, on peut choisir de fabriquer l'étrier dans un matériau choisi indépendamment de considérations relatives au glissement des plaquettes de frein par rapport à l'étrier.

Selon un mode de réalisation particulier, ledit étrier présente des moyens d'attache fixant directement ledit actionneur audit étrier.

Grâce à ces caractéristiques, on évite le recours à une pièce supplémentaire et on limite les opérations d'assemblage et les exigences sur les tolérances de fabrication.

De préférence, lesdits moyens d'attache comprennent un alésage d'actionneur ménagé dans ladite première portion, ledit alésage d'actionneur débouchant dans ledit logement central en regard de ladite première plaquette de frein, ledit actionneur étant au moins partiellement inséré dans ledit alésage d'actionneur, ledit actionneur comprenant un piston mobile apte à faire saille dans ledit logement central à partir dudit alésage d'actionneur pour déplacer ladite première plaquette de frein.

Avantageusement, ladite première portion comprend des moyens de fixation aptes à fixer ledit étrier sur un support de roue, ledit support de disque étant apte à être fixé sur ledit support de roue.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective éclatée d'un système de freinage selon l'art antérieur,
- la figure 2 est une vue de côté du système de freinage de la figure 1,
- la figure 3 est une vue en perspective d'un système de freinage selon un mode de réalisation de l'invention,
- la figure 4 est une vue en perspective de l'étrier et de l'actionneur du système de freinage de la figure 3, et
- la figure 5 est une autre vue en perspective de l'étrier et de l'actionneur de la figure 4.

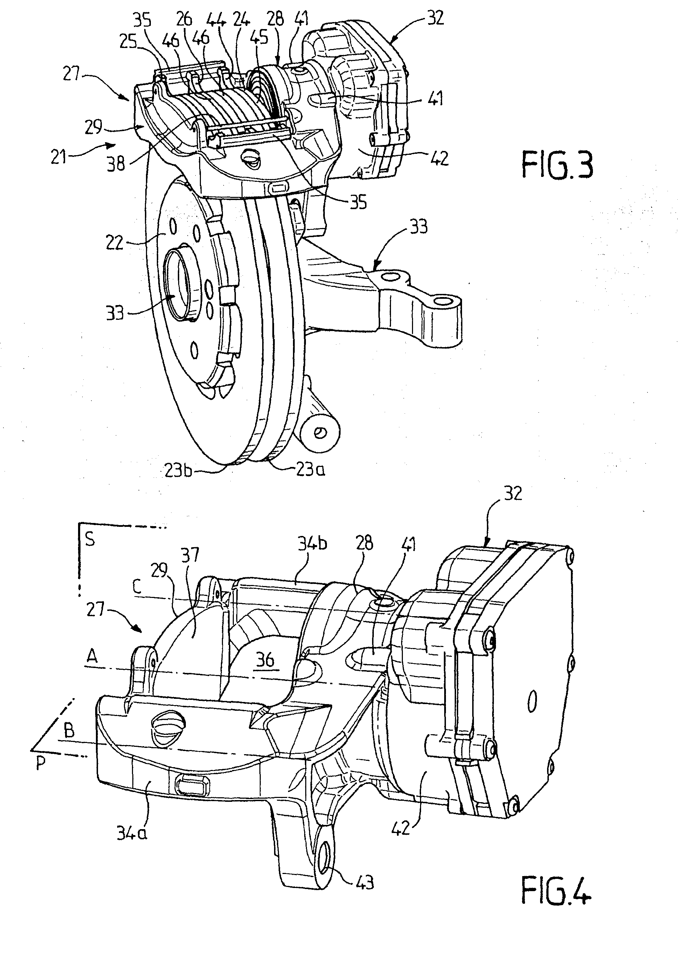

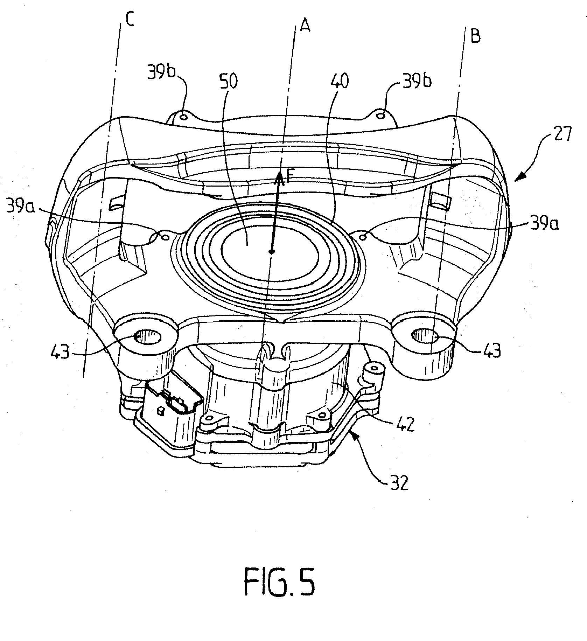

Le système de freinage 21 représenté sur la figure 3 comprend un support de disque 22 monté sur un support de roue 33. Un premier disque de freinage 23a et un deuxième disque de freinage 23b sont montés sur le support de disque 22 de manière solidaire en rotation avec le support de disque 22 et mobiles axialement par rapport à celui-ci. Un étrier 27, d'un seul tenant, est fixé au support de roue 33. L'étrier 27 sera décrit plus en détail ci-dessous, notamment en référence aux figures 4 et 5. Le système de freinage 21 comprend également une plaquette de frein interne 24 du côté du premier disque 23a opposé au deuxième disque 23b, une plaquette de frein centrale 26 située entre les deux disques de freinage 23a et 23b et une plaquette de frein externe 25 située du côté du deuxième disque de freinage 23b opposé au premier disque de freinage 23a. Chaque plaquette de frein 24, 25 et 26 comprend une plaque support 45 et une, ou deux dans le cas de la plaquette de frein centrale 26, garniture de friction 46.

Le système de freinage 21 comprend également un actionneur électrique 32 fixé à l'étrier 27. L'actionneur 32 comprend un boîtier principal 42 dans lequel est agencé un moteur électrique, et un piston 50 (voir figure 5). L'actionneur 32 est relié à un organe de commande (non représenté) apte à lui envoyer un signal de commande de freinage.

Les figures 4 et 5 représentent uniquement l'étrier monobloc 27 et l'actionneur 32. Les autres éléments du système de freinage 21 ont été omis pour plus de clarté.

L'étrier 27 comprend une première portion 28 située du côté de la plaquette de frein interne 24 opposée aux disques de freinage 23a et 23b et une deuxième portion 29 située du côté de la plaquette de frein externe 25 opposée aux disques de freinage 23b et 23a. La deuxième portion 29 présente une surface d'appui 37 agencée en regard de la plaquette de frein externe 25. La première portion 28 et la deuxième portion 29 sont reliées par un premier bras 34a et un deuxième bras 34b.

L'étrier 27 présente un logement central 36 délimité par les deux bras 34a et 34b et par les première et deuxième portions 28 et 29. Comme le montre la figure 3, les disques de freinage 23a et 23b sont partiellement insérés dans le logement central 36 et les plaquettes de frein 24, 25 et 26 sont agencées dans le logement central 36. La première portion 28 de l'étrier 27 présente un alésage d'actionneur 40 qui débouche dans le logement central 36.

Le boîtier principal 42 de l'actionneur 32 est fixé à la première portion 28 du côté opposé au logement central 36. A cet effet, la première portion 28 présente des alésages taraudés 41. L'alésage d'actionneur 40 traverse la première portion 28 de sorte qu'un piston 50 de l'actionneur 32 est apte à faire saillie dans le logement central 36 en passant dans l'alésage d'actionneur 40. En réponse à un signal de commande de freinage, l'actionneur 32 est apte à déplacer le piston 50 en direction de la deuxième portion 29. Le piston 50 exerce alors une force F sur la plaquette de freinage interne 24 passant par un axe de poussée A. Il en résulte un déplacement de la plaquette interne 24 contre le premier disque de freinage 23a, un déplacement du premier disque de freinage 23a contre la plaquette de frein centrale 26, un déplacement de la plaquette de frein centrale 26 contre le deuxième disque de frein 23b, un déplacement du deuxième disque de freinage 23b contre la plaquette de frein externe 25 et enfin un déplacement de la plaquette de frein externe 25 contre la surface d'appui 37. Un couple de freinage est donc généré par le frottement des disques de freinage 23a et 23b sur les plaquettes de frein 24, 25 et 26 serrées entre la surface d'appui 37 et le piston 50.

Le premier bras 34a et le deuxième bras 34b s'étendent respectivement selon un axe de premier bras B et selon un axe de deuxième bras C. Les axes B et C sont parallèles à l'axe de poussée A et compris dans un plan géométrique P comprenant également l'axe A. Ainsi, quand l'actionneur exerce la force F, les bras 34a et 34b travaillent essentiellement en traction. De plus, comme on peut le voir sur les figures, l'étrier 27 est symétrique par rapport à un plan de symétrie S contenant l'axe A et perpendiculaire au plan géométrique P. La déformation de l'étrier 27 en réponse à une force F correspond donc essentiellement à un allongement des bras 34a et 34b. Dans ces conditions, les plaquettes de frein 24, 25 et 26 restent sensiblement parallèles aux disques de freinage 23a et 23b, et l'usure des garnitures de friction 46 est globalement uniforme.

Le logement central 36 est ouvert vers le haut de la figure 3 du côté opposé au support de disque 22. Cela permet d'évacuer de la chaleur, d'inspecter visuellement l'usure des plaquettes de frein 24, 25 et 26 et, le cas échéant, d'extraire les plaquettes de frein 24, 25 et 26 pour les remplacer par des plaquettes neuves.

Une tôle 35 est fixée sur chaque bras 34a et 34b. La tôle 35 est réalisée en un matériau permettant le glissement des oreilles 44 des plaquettes de frein 24, 25 et 26 avec un frottement peu élevé. Les tôles 35 comprennent une portion rabattue au-dessus des oreilles 44 pour maintenir les plaquettes de frein dans le logement central 36. Ces portions rabattues sont élastiquement déformables pour permettre l'extraction des plaquettes de frein et l'insertion de nouvelles plaquettes de frein.

La première portion 28 présente deux alésages de goupilles 39a et la deuxième portion 29 présente deux alésages de goupilles 39b en regard des alésages 39a. Les alésages 39a et 39b sont ménagés dans des oreilles en saillie de l'étrier 27 prévues à cet effet. Deux goupilles amovibles 38, dont une seule est représentée sur la figure 3, s'étendent entre les alésages 39a et 39b. Quand les goupilles 38 sont en place, elles empêchent l'extraction ou l'insertion de plaquettes de frein.

La première portion 28 de l'étrier 27 présente deux alésages de fixation 43 symétriques, ménagés dans une partie inférieure de la portion 28, c'est-à-dire la partie dirigée vers le support de roue 22 par rapport aux bras 34a et 34b. Les alésages de fixation 43 permettent de fixer l'étrier 27 sur le support de roue 33. Une telle fixation en deux points symétriques espacés permet d'assurer une déformation limitée de l'étrier 27 en réaction au couple de freinage.

On constatera à la lecture de la description qui précède que l'étrier 27 peut être facilement fabriqué par moulage suivi de quelques opérations d'usinage.

Le système de freinage 1 comprend un actionneur 32 électrique. Bien entendu, selon un autre mode de réalisation non représenté, un système de freinage selon l'invention pourrait comprendre un actionneur hydraulique ou électro-hydraulique.

Le système de freinage 1 comprend deux disques de freinage axialement mobiles et trois plaquettes de frein. Dans un mode de réalisation non représenté, un système de freinage selon l'invention pourrait comprendre un seul disque de freinage axialement mobile et deux plaquettes de frein. Toutefois, on préfère le mode de réalisation à deux disques de freinage car il présente comme avantage, notamment, de présenter quatre surfaces de friction et quatre surfaces de refroidissement des disques.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de freinage (21) pour roue de véhicule automobile, ledit système de freinage comprenant un support de disque (22) destiné à former un élément rotatif de ladite roue, au moins un disque de freinage (23a, 23b) solidaire en rotation dudit support de disque et mobile de manière axiale par rapport audit support de disque, un étrier (27) destiné à être monté de manière fixe par rapport à un support (33) de ladite roue, au moins une première plaquette de frein (24) portée de manière axialement mobile par ledit étrier d'un côté dudit au moins un disque de freinage et une deuxième plaquette de frein (25) portée par ledit étrier de l'autre côté dudit au moins un disque de freinage, ledit étrier comportant une première portion (28) agencée du côté de la première plaquette de frein opposé au disque de freinage, une deuxième portion (29) agencée du côté de la deuxième plaquette de frein opposé au disque de freinage et au moins un bras (34a, 34b) reliant lesdites première et deuxième portions, ladite deuxième portion présentant une surface d'appui (37), ledit système de freinage comprenant un actionneur (32) fixé à ladite première portion dudit étrier, ledit actionneur étant apte à déplacer ladite première plaquette de frein de manière à générer un couple de freinage dudit véhicule par contact entre la première plaquette de frein et ledit au moins un disque de freinage, entre ledit au moins un disque de freinage et ladite deuxième plaquette de frein et entre ladite deuxième plaquette de frein et ladite surface d'appui, **caractérisé par le fait que** lesdites première et deuxième portions et ledit au moins un bras dudit étrier sont réalisés d'une seule pièce.

2. Système de freinage selon la revendication 1, **caractérisé par le fait que** ledit étrier comprend un premier bras (34a) et un deuxième bras (34b) reliant lesdites première et deuxième portions, ledit actionneur étant apte à exercer une force (F) alignée selon un axe de poussée (A) sur ladite première plaquette de frein, lesdits bras s'étendant partiellement dans un plan géométrique (P) comprenant ledit axe de poussée, parallèlement audit axe de poussée de part et d'autre dudit axe de poussée.

3. Système de freinage selon la revendication 2, **caractérisé par le fait que** lesdits bras sont symétriques par rapport à un plan de symétrie (S) perpendiculaire audit plan géométrique et comprenant ledit axe de poussée.

4. Système de freinage selon la revendication 3, **caractérisé par le fait que** ledit étrier est symétrique par rapport audit plan de symétrie.

5. Système de freinage selon l'une des revendications 2 à 4, **caractérisé par le fait que** ledit étrier présente un logement central (36) délimité par lesdits bras et lesdites première et deuxième portions, lesdites plaquettes de frein étant agencées dans ledit logement central, ledit logement central étant ouvert du côté tourné vers ledit support de roue pour recevoir partiellement ledit au moins un disque de freinage, ledit logement central étant ouvert du côté opposé audit support de roue, lesdites plaquettes de frein étant aptes à être insérées dans et extraites du logement central par ledit côté opposé audit support de roue.

6. Système de freinage selon la revendication 5, **caractérisé par le fait qu'**il comprend des moyens de retenue apte (38) à empêcher l'insertion ou l'extraction desdites plaquettes de frein du logement central par ledit côté opposé audit support de roue.

7. Système de freinage selon la revendication 6, **caractérisé par le fait que** lesdits moyens de retenue comprennent au moins une goupille amovible s'étendant entre lesdites première et deuxième portions du côté desdites plaquettes de frein opposé audit support de roue, lesdites première et deuxième portions comprenant chacune au moins un alésage de fixation (39a, 39b) de ladite goupille.

8. Système de freinage selon l'une des revendications 1 à 7, **caractérisé par le fait que** lesdites plaquettes de freins sont portées par ledit étrier par l'intermédiaire d'un organe de maintien et de glissement (35).

9. Système de freinage selon l'une des revendications 5 à 8, **caractérisé par le fait que** ledit étrier présente des moyens d'attache (40, 41) fixant directement ledit actionneur audit étrier.

10. Système de freinage selon la revendication 9, **caractérisé par le fait que** lesdits moyens d'attache comprennent un alésage d'actionneur (40) ménagé dans ladite première portion, ledit alésage d'actionneur débouchant dans ledit logement central en regard de ladite première plaquette de frein, ledit actionneur étant au moins partiellement inséré dans ledit alésage d'actionneur, ledit actionneur comprenant un piston mobile (50) apte à faire saille dans ledit logement central à partir dudit alésage d'actionneur pour déplacer ladite première plaquette de frein.

11. Système de freinage selon l'une des revendications 1 à 10, **caractérisé par le fait que** ladite première portion comprend des moyens de fixation (43) aptes à fixer ledit étrier sur un support de roue, ledit support de disque étant apte à être fixé sur ledit support de roue.
